# EUROPEAN PATENT SPECIFICATION

(11) **EP 3 960 633 B1**
(45) Date of publication and mention of the grant of the patent: **19.03.2025**
(21) Application number: 21192007.9
(22) Date of filing: 18.08.2021
(51) Int. Cl.: B64D 33/08, B64D 27/10, B64D 33/00, B64D 27/16, F02C 6/00, F01D 15/10, B64D 27/33, B64D 31/18, B64D 35/025, B64D 41/00

(54) **GROUND OPERATIONS OF A HYBRID ELECTRIC PROPULSION SYSTEM**
GRUNDOPERATIONEN EINES HYBRIDEN ELEKTRISCHEN ANTRIEBSSYSTEMS
OPÉRATIONS AU SOL D'UN SYSTÈME DE PROPULSION ÉLECTRIQUE HYBRIDE

(30) Priority: 31.08.2020 US 202063072573 P; 28.01.2021 US 202117160711
(43) Date of publication of application: 02.03.2022
(60) Divisional application: 25155936.5
(73) Proprietor: General Electric Company, Evendale, Ohio 45215 (US)
(72) Inventor: RAMBO, Jeffrey, Cincinnati, 45215 (US); OSTDIEK, David, Cincinnati, 45215 (US)
(74) Representative: Openshaw & Co.

(56) References cited:
- EP-A1- 3 190 052
- US-A1- 2015 183 387
- US-A1- 2017 320 584
- US-A1- 2018 002 025
- US-A1- 2018 134 407
- US-A1- 2019 375 512

## Description

### FIELD

The present subject matter relates generally to a hybrid-electric aircraft propulsion system, hybrid-electric power systems for aircraft and aircraft engines, and methods for operating the same.

### BACKGROUND

A conventional commercial aircraft generally includes a fuselage, a pair of wings, and a propulsion system that provides thrust. The propulsion system typically includes at least two aircraft engines, such as turbofan jet engines. Each turbofan jet engine is typically mounted to a respective one of the wings of the aircraft, such as in a suspended position beneath the wing, separated from the wing and fuselage.

Hybrid electric propulsion systems are being developed to improve an efficiency of the conventional commercial aircraft. Various hybrid electric propulsion systems include an electric machine driven by one of the aircraft engines. The inventors of the present disclosure have discovered various configurations and/or methods to address unmet needs for improvements in the known hybrid electric propulsion systems.

US 2018/002025 A1 relates to an aircraft including a parallel hybrid gas turbine electric propulsion system. US 2019/375512 A1 relates to a hybrid electric taxi system or a full electric taxi system. US 2017/320584 A1 relates to a hybrid gas-electric turbine engine. EP 3 190 052 A1 relates to an aircraft engine and associated method for driving a fan with a low pressure shaft during taxi operations. In particular it discloses that, in addition to permitting the aircraft to taxi at a desired speed with reduced fuel consumption and brake wear, the taxiing of the aircraft that is provided by an electric taxi system with a core gas turbine engine shut off also serves to cool down the components of the core gas turbine engine.

### BRIEF DESCRIPTION

Aspects and advantages of the invention will be set forth in part in the following description, or may be obvious from the description, or may be learned through practice of the invention.

In one exemplary aspect of the present disclosure, a method as claimed in claim 1 is provided.

These and other features, aspects, and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
Fig. 1 is a schematic, cross-sectional view of a gas turbine engine in accordance with an exemplary embodiment of the present disclosure.
Fig. 2 is a schematic, cross-sectional view of a gas turbine engine in accordance with another exemplary embodiment of the present disclosure.
Fig. 3 is a flow diagram of a method for operating a gas turbine engine in accordance with an exemplary aspect of the present disclosure.
Fig. 4 is a flow diagram of a method for operating a gas turbine engine in accordance with another exemplary aspect of the present disclosure.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine nozzle or exhaust.

The terms "upstream" and "downstream" refer to the relative direction with respect to a flow in a pathway. For example, with respect to a fluid flow, "upstream" refers to the direction from which the fluid flows, and "downstream" refers to the direction to which the fluid flows. However, the terms "upstream" and "downstream" as used herein may also refer to a flow of electricity.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

The present disclosure is generally related to a method of operating a hybrid-electric propulsion system for an aircraft during ground operations of the aircraft. For example, in certain exemplary aspects of the method of the present disclosure, the method may generally be operated with a gas turbine engine having an electric machine that is rotatable therewith. The method may generate power with the electric machine through operation of the gas turbine engine during flight operations of the aircraft, storing at least a portion of such electric power in an energy storage unit (e.g., a battery). During or after landing of the aircraft, the gas turbine engine switches from a combustion operating mode to an electric operating mode. Little or no fuel may be provided to the gas turbine engine during the electric operating mode. Further, during the electric operating mode, the electric machine receives power from the electric energy storage unit to drive a low pressure or high pressure system of the gas turbine engine to provide or assist with providing ground operations of the aircraft (e.g., thrust for taxiing the aircraft, rotating a shaft of the engine (including a high pressure shaft and/or a low pressure shaft) for rotor bow mitigation/ soakback mitigation, etc.). In such a manner, the method may generally extract power during operations with power to spare (e.g., during a descent of the aircraft), or during operations that may produce additional power in an efficient manner (e.g., during a cruise of the aircraft), and utilize such power during ground operations.

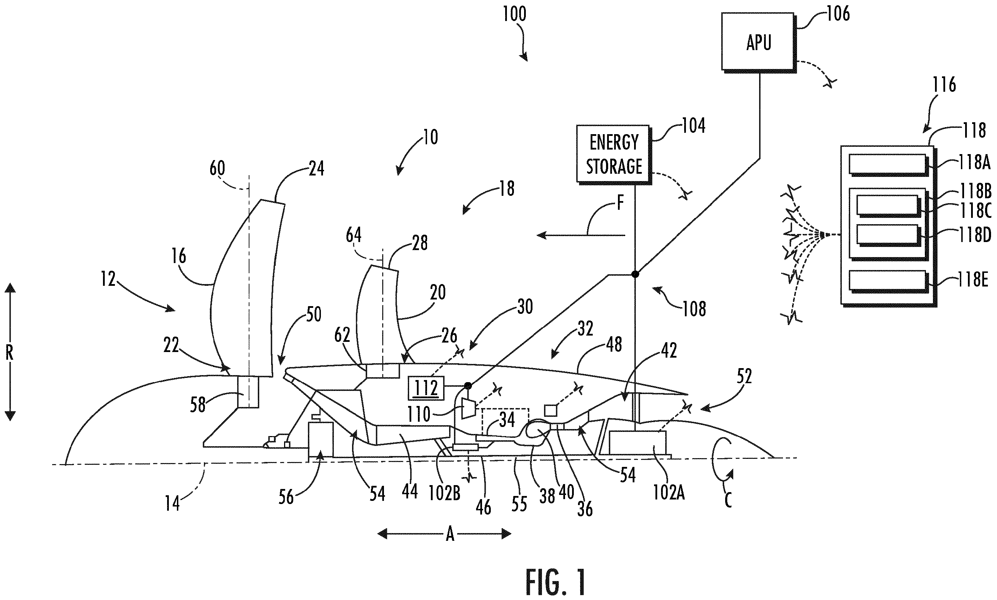

Referring now to Fig. 1, a cross-sectional view of an exemplary embodiment of a gas turbine engine as may incorporate one or more inventive aspects of the present disclosure is provided. In particular, the exemplary gas turbine engine of Fig. 1 is a configured as a single unducted rotor engine 10 defining an axial direction A, a radial direction R, and a circumferential direction C. As is seen from Fig. 1, the engine 10 takes the form of an open rotor propulsion system and has a rotor assembly 12 which includes an array of airfoils arranged around a central longitudinal axis 14 of engine 10, and more particularly includes an array of rotor blades 16 arranged around the central longitudinal axis 14 of engine 10.

Moreover, as will be explained in more detail below, the engine 10 additionally includes a non-rotating vane assembly 18 positioned aft of the rotor assembly 12 (i.e., non-rotating with respect to the central axis 14), which includes an array of airfoils also disposed around central axis 14, and more particularly includes an array of vanes 20 disposed around central axis 14.

The rotor blades 16 are arranged in typically equally spaced relation around the centerline 14, and each blade has a root 22 and a tip 24 and a span defined therebetween. Similarly, the vanes 20 are also arranged in typically equally spaced relation around the centerline 14, and each has a root 26 and a tip 28 and a span defined therebetween. The rotor assembly 12 further includes a hub 44 located forward of the plurality of rotor blades 16.

Additionally, the engine 10 includes a turbomachine 30 having a core (or high pressure/ high speed system) 32 and a low pressure/ low speed system. It will be appreciated that as used herein, the terms "speed" and "pressure" are used with respect to the high pressure/high speed system and low pressure/low speed system interchangeably. Further, it will be appreciate that the terms "high" and "low" are used in this same context to distinguish the two systems, and are not meant to imply any absolute speed and/or pressure values.

The core 32 generally includes a high-speed compressor 34, a high speed turbine 36, and a high speed shaft 38 extending therebetween and connecting the high speed compressor 34 and high speed turbine 36. The high speed compressor 34, the high speed turbine 36, and the high speed shaft 38 may collectively be referred to as a high speed spool of the engine. Further, a combustion section 40 is located between the high speed compressor 34 and high speed turbine 36. The combustion section 40 may include one or more configurations for receiving a mixture of fuel and air, and providing a flow of combustion gasses through the high speed turbine 36 for driving the high speed spool.

The low speed system similarly includes a low speed turbine 42, a low speed compressor or booster, 44, and a low speed shaft 46 extending between and connecting the low speed compressor 44 and low speed turbine 42. The low speed compressor 44, the low speed turbine 42, and the low speed shaft 46 may collectively be referred to as a low speed spool 55 of the engine.

Although the engine 10 is depicted with the low speed compressor 44 positioned forward of the high speed compressor 34, in certain embodiments the compressors 34, 44 may be in an interdigitated arrangement. Additionally, or alternatively, although the engine 10 is depicted with the high speed turbine 36 positioned forward of the low speed turbine 42, in certain embodiments the turbines 36, 42 may similarly be in an interdigitated arrangement.

Referring still to Fig. 1, the turbomachine 30 is generally encased in a cowl 48. Moreover, it will be appreciated that the cowl 48 defines at least in part an inlet 50 and an exhaust 52, and includes a turbomachinery flowpath 54 extending between the inlet 50 and the exhaust 52. The inlet 50 is for the embodiment shown an annular or axisymmetric 360 degree inlet 50 located between the rotor blade assembly 12 and the fixed or stationary vane assembly 18, and provides a path for incoming atmospheric air to enter the turbomachinery flowpath 54 (and compressors 44, 34, combustion section 40, and turbines 36, 42) inwardly of the guide vanes 28 along the radial direction R. Such a location may be advantageous for a variety of reasons, including management of icing performance as well as protecting the inlet 50 from various objects and materials as may be encountered in operation.

However, in other embodiments, the inlet 50 may be positioned at any other suitable location, e.g., aft of the vane assembly 18, arranged in a non-axisymmetric manner, etc.

As is depicted, the rotor assembly 12 is driven by the turbomachine 30, and more specifically, is driven by the low speed spool 55. More specifically, still, engine 10 in the embodiment shown in Fig. 1 includes a power gearbox 56, and the rotor assembly 12 is driven by the low speed spool 55 of the turbomachine 30 across the power gearbox 56. In such a manner, the rotating rotor blades 16 of the rotor assembly 12 may rotate around the axis 14 and generate thrust to propel engine 10, and hence an aircraft to which it is associated, in a forward direction F. For example, in certain embodiments, one or more engines configured in a manner similar to the exemplary engine 10 depicted in Fig. 1 may be incorporated in and utilized with the aircraft of Figs. 1, 4, and/or 5.

The power gearbox 56 may include a gearset for decreasing a rotational speed of the low speed spool 55 relative to the low speed turbine 42, such that the rotor assembly 12 may rotate at a slower rotational speed than the low speed spool 55.

As briefly mentioned above the engine 10 includes a vane assembly 18. The vane assembly 18 extends from the cowl 48 and is positioned aft of the rotor assembly 12. The vanes 20 of the vane assembly 18 may be mounted to a stationary frame or other mounting structure and do not rotate relative to the central axis 14. For reference purposes, Fig. 1 also depicts the forward direction with arrow F, which in turn defines the forward and aft portions of the system. As shown in Fig. 1, the rotor assembly 12 is located forward of the turbomachine 30 in a "puller" configuration, and the exhaust 52 is located aft of the guide vanes 28. As will be appreciated, the vanes 20 of the vane assembly 18 may be configured for straightening out an airflow (e.g., reducing a swirl in the airflow) from the rotor assembly 12 to increase an efficiency of the engine 10. For example, the vanes 20 may be sized, shaped, and configured to impart a counteracting swirl to the airflow from the rotor blades 16 so that in a downstream direction aft of both rows of airfoils (e.g., blades 16, vanes 20) the airflow has a greatly reduced degree of swirl, which may translate to an increased level of induced efficiency.

Referring still to Fig. 1, it may be desirable that the rotor blades 16, the vanes 20, or both, incorporate a pitch change mechanism such that the airfoils (e.g., blades 16, vanes 20, etc.) can be rotated with respect to an axis of pitch rotation either independently or in conjunction with one another. Such pitch change can be utilized to vary thrust and/or swirl effects under various operating conditions, including to adjust a magnitude or direction of thrust produced at the rotor blades 16, or to provide a thrust reversing feature which may be useful in certain operating conditions such as upon landing an aircraft, or to desirably adjust acoustic noise produced at least in part by the rotor blades 16, the vanes 20, or aerodynamic interactions from the rotor blades 16relative to the vanes 20. More specifically, for the embodiment of Fig. 1, the rotor assembly 12 is depicted with a pitch change mechanism 58 for rotating the rotor blades 16 about their respective pitch axes 60, and the vane assembly 18 is depicted with a pitch change mechanism 62 for rotating the vanes 20 about their respective pitch axes 64.

It will be appreciated, however, that the exemplary single rotor unducted engine 10 depicted in Fig. 1 is by way of example only, and that in other exemplary embodiments, the engine 10 may have any other suitable configuration, including, for example, any other suitable number of shafts or spools, turbines, compressors, etc.; fixed-pitch blades 16, 20, or both; a direct-drive configuration (i.e., may not include the gearbox 56); etc.

Additionally, or alternatively, in other exemplary embodiments, any other suitable gas turbine engine may be provided. For example, in other exemplary embodiments, the gas turbine engine may be a ducted turbofan engine, a turboshaft engine, a turboprop engine, turbojet engine, etc. Moreover, for example, although the engine is depicted as a single unducted rotor engine, in other embodiments, the engine may include a multi-stage open rotor configuration, and aspects of the disclosure described hereinbelow may be incorporated therein.

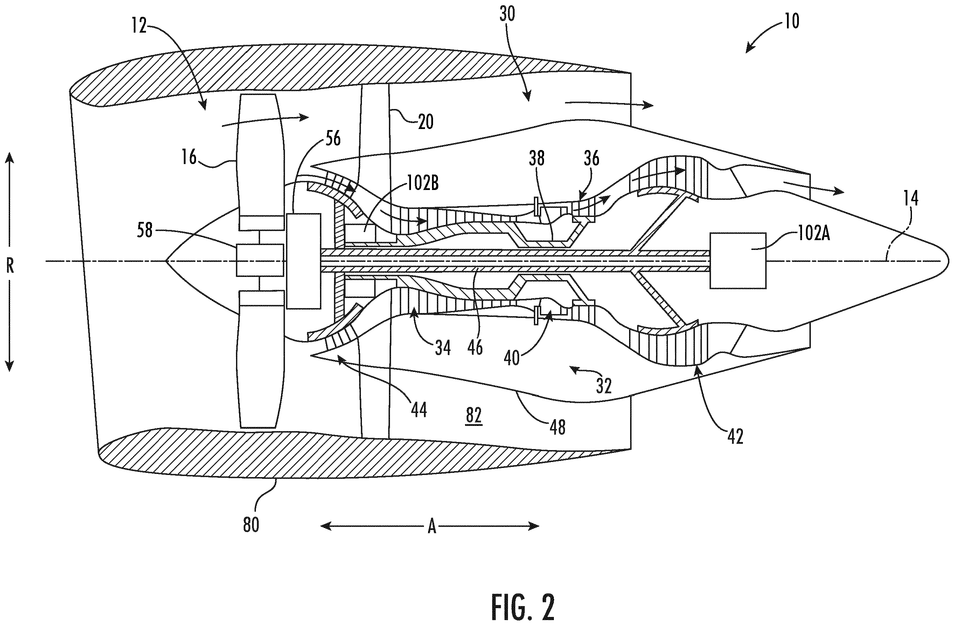

Further, still, in other exemplary embodiments, the engine 10 may be configured as a ducted turbofan engine. For example, referring briefly to Fig. 2, an engine 10 in accordance with another exemplary embodiment of the present disclosure is depicted. The exemplary embodiment of Fig. 2 may be configured in substantially the same manner as the exemplary engine 10 described above with respect to Fig. 1, and the same or similar reference numerals may refer to the same or similar parts. However, as will be appreciated, for the embodiment shown, the engine 10 further includes a nacelle 80 circumferentially surrounding at least in part the rotor assembly 12 and turbomachine 30, defining a bypass passage 82 therebetween.

Referring now back to Fig. 1, it will further be appreciated that the engine is integrated with an electric power system 100. The electric power system 100 generally includes an electric machine 102 coupled to at least the low pressure system, an energy storage unit 104, and for the embodiment depicted, an auxiliary power unit 106. The auxiliary power unit 106 may include a combustion engine driving an electric generator, and may be located remotely from the engine 10. For example, in at least certain exemplary embodiments, the auxiliary power unit 106 may be located within a fuselage of the aircraft utilizing the engine 10, e.g., at an aft end of the aircraft (see, e.g., Fig. 1).

Further, for the embodiment shown, the electric power system 100 includes an electric power bus 108 electrically connecting the various components of electric power system 100. The electric power bus 108 may be, e.g., one or more electrical lines arranged in any suitable configuration.

Further, still, for the embodiment shown, the electric machine 102 of the electric power system 100 is a low speed ("LS") electric machine 102A coupled to the low pressure system of the engine. More specifically, for the embodiment shown, the LS electric machine 102A is embedded within the engine 10, at a location within or aft of the turbine section of the engine 10, and inward of the core airflow path 54 through the engine 10 along the radial direction R. It will be appreciated, however, that in other example embodiments, the LS electric machine 102A may additionally, or alternatively, be configured in the other suitable manner. For example, in other embodiments, the LS electric machine 102A may be embedded within a compressor section of the engine 10, may be located outward of core airflow path 54 along the radial direction R (and, e.g., within the cowl 48), may be driven off of a gearbox (such as an accessory gearbox), etc.

Moreover, for the embodiment shown, the LS electric machine 102A is not the only electric machine 102 of the electric power system 100 integrated with the engine 10. More specifically, the electric power system 100 further includes a high speed ("HS") electric machine 102B coupled to the high-pressure system/core of the engine 10, and in electrical communication with the electric power bus 108. The HS electric machine 102B is, for the embodiment shown, also embedded within the engine 10 at a location inward of the core airflow path 54. However, for the embodiment shown, the HS electric machine 102B is located within the compressor section of the engine 10. It will be appreciated that in other embodiments, the HS electric machine 102B may alternatively be positioned outward of the core airflow path 54 along the radial direction R, driven through, e.g., a geared connection. For example, in certain embodiments, the HS electric machine 102B may be coupled to an accessory gearbox (not shown), which is in turn coupled to the high-pressure system of the engine 10.

In at least certain exemplary embodiments, the energy storage unit 104 may include one or more batteries. Additionally, or alternatively, the energy storage unit 104 may include one or more supercapacitor arrays, one or more ultracapacitor arrays, or both. In at least certain embodiments, the energy storage unit 104 may be configured to provide at least 5 kilowatts (kW) of energy to the electric power system 100, such as at least 50 kW, such as at least 50 kW, such as at least 250 kW, such as at least 300 kW, such as at least 350 kW, such as at least 400 kW, such as at least 500 kW, such as up to 5 megawatts (MW), such as up to 10 megawatts (MW). In one or more of these configurations, the amount of power provided may refer to a peak power output at any instant time during a discharge period. Further, the energy storage unit 104 may be configured to provide such electrical power for at least two minutes, such as at least three minutes, such as at least five minutes, such as up to an hour. For example, the energy storage unit 104 may be configured to store at least 10 kW-minutes of power, such as at least 50 kW-minutes of power, such as at least 250 kW-minutes of power, such as at least 500 kW-minutes of power, such as at least 1000 kW-minutes of power, such as at least 1500 kW-minutes of power, such as up to 250 MW-minutes of power. In one or more of these configurations, the amount of power provided above may be a peak power output at any instant time during a discharge period.

As is also depicted in Fig. 1, the engine 10 includes one or more accessory systems. Specifically, for the embodiment shown, the engine 10 includes a blower 110 and a lubrication system 112. The blower 110 is in the embodiment shown positioned within an undercowl area (an area under the cowl 48 and outward of the turbomachinery flowpath 54) and is electrically connected to the energy storage unit. The blower 110 may be configured to provide an airflow to the compressor section, the combustion section, or both from, e.g., an ambient location (such as ambient air drawn through a bypass duct), air drawn from an interior space of the aircraft wing, a location under the cowl 48, or a combination of these locations. The blower 110 may be operated after the engine 10 is shut down to maintain an airflow through certain components of the engine 10 to prevent or minimize heat within various components of the engine 10 from "soaking back" into, e.g., fuel nozzles of the combustion section and heating such fuel nozzles above a temperature which would cause coking of any remaining fuel therein. For example, in certain exemplary aspects, the blower may produce an airflow through the turbomachinery flowpath 54, the undercowl area, or both. In particular, the blower 110 may provide an airflow from the undercowl area through a compressor or combustor port and into the turbomachinery flowpath 54 through the compressor and combustion sections of the engine 10 (as is indicated in phantom lines in Fig. 1). Alternatively, the blower 110 may pull an airflow from the turbomachinery flowpath 54 through the compressor and/or combustor sections of the engine 10 to provide a desired soak-back protection.

Further, as noted, for the embodiment shown, the engine 10 includes a lubrication system 112. The lubrication system 112 may be a lubrication system for the low pressure system, such that when driven by the power provided from the electric power system 100, the lubrication system 112 circulates a lubrication fluid through various portions of the low pressure system (e.g., bearings, sumps, heat exchangers, etc.). In such a manner, the lubrication system 112 may continue to support the lubrication functionality of the engine 10 for the low pressure system when, e.g., the LS electric machine 102A rotates the low pressure system when the engine 10 is in an electric operating mode, and a fuel flow to the combustion section has been stopped.

It will be appreciated, however, in another example embodiment, the lubrication system 112 may additionally or alternatively include a lubrication system for the high-pressure system, such that when driven by the power provided by the electric power system 100 the lubrication system 112 circulates a lubrication fluid through various portions of the high-pressure system (e.g., bearings, sumps, heat exchangers, etc.).

Referring still to Fig. 1, the exemplary electric power system 100 is operably connected to a controller 116. The controller 116 may be an engine controller for the engine 10 (e.g., a Full Authority Digital Engine Control controller), may be an aircraft controller, may be a controller dedicated to the electric power system 100, etc.

The controller 116 may be configured to receive data indicative of various operating conditions and parameters of the engine 10 during operation of the engine 10. For example, as will be appreciated from Fig. 1, the engine 10 includes one or more sensors 114 configured to sense data indicative of various operating conditions and parameters of the engine 10, such as rotational speeds, temperatures, pressures, vibrations, etc. For example, the one or more sensors 114 may sense data indicative of a temperature parameter within the engine 10, such as an exhaust gas temperature, a combustion section temperature, a compressor exit temperature, etc. Additionally, or alternatively, the one or more sensors 114 may sense data indicative of a speed of the engine 10, such as a rotational speed of the low pressure system, a rotational speed of the high-pressure system, a rotational speed of the rotor section 12, etc. It will be appreciated that although a single sensor 114 is depicted in Fig. 1, a plurality of sensors 114 providing the above functionality may be positioned throughout the engine 10 to sense the relevant data. In addition, as will be appreciated from the description herein, the controller 116 may also be configured to receive data form other sources, such as from an aircraft incorporating the engine, such as from one or more sensors of the aircraft incorporating the engine. In such a manner, the controller 116 may receive data indicative of an altitude of the aircraft, a signal to engage a supplemental power from e.g., a pilot or other operator, etc.

Referring particularly to the operation of the controller 116, in at least certain embodiments, the controller 116 can include one or more computing device(s) 118. The computing device(s) 118 can include one or more processor(s) 118A and one or more memory device(s) 118B. The one or more processor(s) 118A can include any suitable processing device, such as a microprocessor, microcontroller, integrated circuit, logic device, and/or other suitable processing device. The one or more memory device(s) 118B can include one or more computer-readable media, including, but not limited to, non-transitory computer-readable media, RAM, ROM, hard drives, flash drives, and/or other memory devices.

The one or more memory device(s) 118B can store information accessible by the one or more processor(s) 118A, including computer-readable instructions 118C that can be executed by the one or more processor(s) 118A. The instructions 118C can be any set of instructions that when executed by the one or more processor(s) 118A, cause the one or more processor(s) 118A to perform operations. In some embodiments, the instructions 118C can be executed by the one or more processor(s) 118A to cause the one or more processor(s) 118A to perform operations, such as any of the operations and functions for which the controller 116 and/or the computing device(s) 118 are configured, the operations for operating an electric power system 100 (e.g., method 300), as described herein, and/or any other operations or functions of the one or more computing device(s) 118. The instructions 118C can be software written in any suitable programming language or can be implemented in hardware. Additionally, and/or alternatively, the instructions 118C can be executed in logically and/or virtually separate threads on processor(s) 118A. The memory device(s) 118B can further store data 118D that can be accessed by the processor(s) 118A. For example, the data 118D can include data indicative of power flows, data indicative of engine 10/ aircraft operating conditions, and/or any other data and/or information described herein.

The computing device(s) 118 can also include a network interface 118E used to communicate, for example, with the other components of the engine 10, the aircraft incorporating the engine 10, the electric power system 100, etc. For example, in the embodiment depicted, as noted above, the engine 10 includes one or more sensors 114 for sensing data indicative of one or more parameters of the engine 10 and various accessory systems, and the electric power system 100 includes an energy storage unit 104, an LS electric machine 102A, an HS electric machine 102B, and an auxiliary power unit 106. The controller 116 is operably coupled to these components through, e.g., the network interface 118E, such that the controller 116 may receive data indicative of various operating parameters sensed by the one or more sensors 114 during operation, various operating conditions of the components, etc., and further may provide commands to control electrical flow of the electric power system 100 and other operating parameters of these systems, e.g., in response to the data sensed by the one or more sensors 114 and other conditions.

The network interface 118E can include any suitable components for interfacing with one or more network(s), including for example, transmitters, receivers, ports, controllers, antennas, and/or other suitable components. For example, in the embodiment shown, the network interface 118E is configured as a wireless communication network wirelessly in communication with these components (as is indicated by the dashed communication lines in Fig. 1).

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

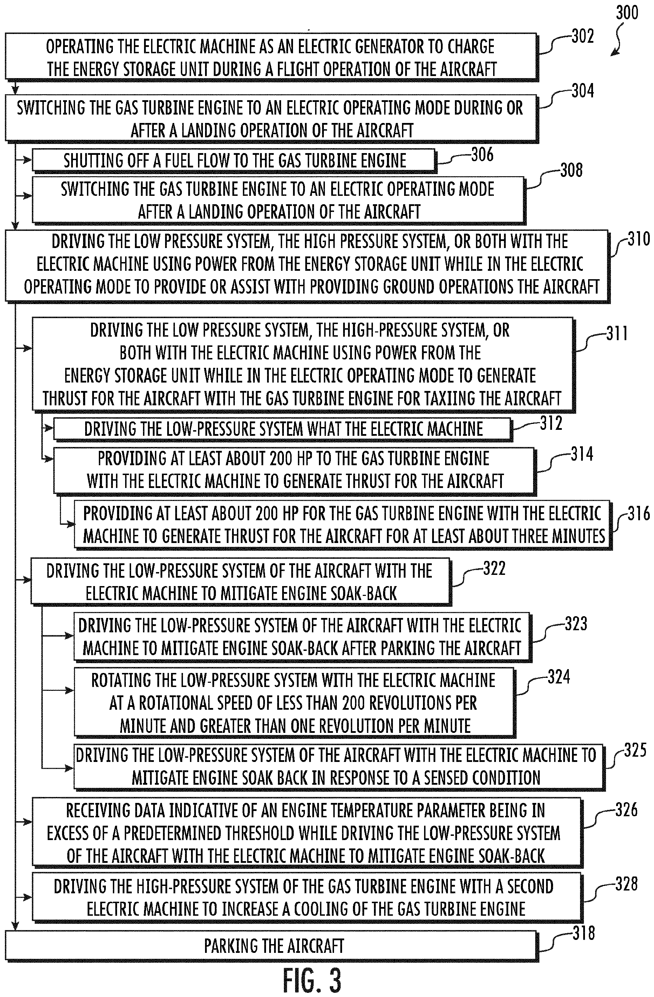

Referring now to Fig. 3, a flow diagram of a method 300 for operating a hybrid electric propulsion system of an aircraft is provided. The method 300 may be utilized with one or more of the exemplary embodiments described above with reference to Fig. 1, and/or with one or more of the other exemplary embodiments described herein. The hybrid electric propulsion system includes a gas turbine engine having a high-pressure system, a low pressure system, an electric machine coupled to at least the low-pressure system, and an energy storage unit.

The method 300 includes at (302) operating the electric machine as an electric generator to charge the energy storage unit during a flight operation of the aircraft. For example, operating the electric machine as an electric generator to charge the energy storage unit at (302) may include operating the electric machine as an electric generator to charge the energy storage unit during a cruise operation of the aircraft, a descent operation of the aircraft, a climb operation of the aircraft, etc.

The method 300 further includes at (304) switching the gas turbine engine to an electric operating mode during or after a landing operation of the aircraft. In certain exemplary aspects, switching the gas turbine engine to an electric operating mode at (304) may include at (306) shutting off a fuel flow to the gas turbine engine. Moreover, in certain exemplary aspects, switching the gas turbine engine to an electric operating mode at (304) may include at (308) switching the gas turbine engine to an electric operating mode after a landing operation of the aircraft. The landing operation of the aircraft may be considered complete once all wheels of the aircraft are on the ground following a descent of the aircraft. Additionally, or alternatively, the landing operation of the aircraft may be considered complete once a vehicle ground speed falls below about 64 kilometres per hour (about 40 miles per hour), once a command is received from the pilot or operator that the landing operation is complete, in response to a position of the vehicle (e.g., once the vehicle is off the runway), etc.

The method 300 further includes driving a system of the gas turbine engine using power from the energy storage unit while in the electric operating mode to provide or assist with providing ground operations the aircraft. More specifically, the method 300 further includes at (310) driving the low pressure system, the high pressure system, or both with the electric machine using power from the energy storage unit while in the electric operating mode to provide or assist with providing ground operations the aircraft. The term "ground operations" generally refer to any operations from the time the aircraft touches down (i.e., wheels touch the ground) to when all engine operation is stopped (including any accessory systems that operate after the engine stops rotating and receiving fuel). As will be appreciated from the discussion herein, the ground operations include driving the low pressure system of the aircraft to mitigate engine soakback, and may include taxiing the aircraft, rotating one or more aspects of the engine to prevent or mitigate rotor bow, driving accessory systems of the engine, or the like.

More specifically, for the exemplary aspect depicted, driving the low pressure system, the high pressure system, or both with the electric machine using power from the energy storage unit while in the electric operating mode to provide or assist with providing ground operations the aircraft at (310) includes at (311) driving the low pressure system, the high-pressure system, or both with the electric machine using power from the energy storage unit while in the electric operating mode to generate thrust for the aircraft with the gas turbine engine for taxiing the aircraft. More specifically, for the exemplary aspect depicted, driving the low-pressure system, the high-pressure system, or both with the electric machine using power from the energy storage unit to generate thrust for the aircraft for taxiing the aircraft at (311) includes at (312) driving the low-pressure system with the electric machine. Notably, driving the low-pressure system with the electric machine at (312) may correspondingly rotate a rotor assembly of the engine (such as, e.g., a fan assembly, a propeller, or the like, such as the rotor assembly 12 of the exemplary engine 10 of Fig. 1) to generate thrust for the aircraft for taxiing the aircraft.

In accordance with the above, it will be appreciated that in at least certain exemplary embodiments, in order to provide a desired amount of thrust for taxiing the aircraft, driving the low-pressure system with the electric machine at (312) may include at (314) providing at least about 200 hp to the gas turbine engine with the electric machine to generate thrust for the aircraft. For example, in certain exemplary aspects, driving the low-pressure system with the electric machine at (312) may include providing at least about 250 hp to the gas turbine engine with the electric machine, such as at least about 300 hp, such as up to about 1000 hp. Moreover, in at least certain exemplary aspects, driving the low-pressure system with the electric machine at (312) may include at (316) providing at least about 200 hp for the gas turbine engine with the electric machine to generate thrust for the aircraft for at least about three minutes, such as for at least about five minutes, such as for at least about 8 minutes, such as for at least about 10 minutes.

Referring still to the exemplary aspect of the method 200 depicted in Fig. 3, it will be appreciated that the exemplary method 300 may further be utilized to reduce a negative effect of heat soak back within the gas turbine engine following a shutdown of the gas turbine engine. The exemplary method 300 depicted further includes at (318) parking the aircraft. Parking the aircraft at (318) generally refers to placing the aircraft in a condition without movement for a prolonged period of time. As will be appreciated, once the aircraft is parked, an airflow through the gas turbine engines of the aircraft may be reduced, potentially creating an opportunity for residual heat within the engine to transfer to certain components, potentially damaging such components. For example, residual heat may transfer from the various rotors and core components of the high pressure system and combustion section to fuel nozzles of the combustion section, to accessories such as control units and other electronics, etc. Additionally or alternatively, the residual heat may transfer to fuel at locations other than the fuel nozzles, potentially heating the fuel near or inside the gas turbine engine and resulting in coke formation.

Accordingly, for the exemplary aspect of the method 300 depicted in Fig. 3, driving the low pressure system, the high pressure system, or both with the electric machine using power from the energy storage unit while in the electric operating mode to provide or assist with providing ground operations the aircraft at (310) additionally includes at (322) driving the low-pressure system of the aircraft with the electric machine to mitigate engine soak-back. Notably, driving the low-pressure system of the aircraft with the electric machine to mitigate engine soak-back at (322) includes at (323) driving the low-pressure system of the aircraft with the electric machine to mitigate engine soak-back after parking the aircraft at (318).

In such a manner, driving the low-pressure system of the aircraft with the electric machine at (322) may include inducing and airflow through a core air flow path of the engine to reduce engine soak-back by providing the airflow through the core. Additionally, or alternatively, driving the low-pressure system of the aircraft with the electric machine at (322) may include inducing and airflow through a core air flow path of the engine to reduce engine soak-back by providing an airflow that rotates the core.

For example, driving the low-pressure system of the aircraft with the electric machine to mitigate engine soak back at (322) further includes at (324) rotating the low-pressure system with the electric machine at a rotational speed of less than 200 revolutions per minute and greater than one revolution per minute. For example, in certain exemplary aspects, driving the low-pressure system of the engine with the electric machine to mitigate engine soak back at (322) may include rotating the low-pressure system of the engine with the electric machine at a rotational speed of less than 100 revolutions per minute, such as at a rotational speed of less than 50 revolutions per minute, such as a rotational speed less than 25 revolutions per minute. Operating the engine in accordance with one or more these exemplary aspects may provide the desired amount of soak back mitigation for the engine.

Further, it will be appreciated that for the embodiment depicted, driving the low-pressure system of the aircraft with the electric machine to mitigate engine soak back at (322) may include at (325) driving the low-pressure system of the aircraft with the electric machine to mitigate engine soak back in response to a sensed condition, or in response to any other operation condition. For example, the sensed condition may be a temperature parameter of the engine (e.g., data indicative of an exhaust gas temperature, a compressor exit temperature, etc.), a time parameter (e.g., a time since shutdown of the engine or parking of the aircraft, etc.), or any other suitable sensed condition. The sensed condition may be a condition sensed with a controller from one or more engine sensors. The operation condition may include the sensed condition(s) as well as, e.g., a manual signal received from an operator.

Moreover, it will be appreciated that the method 300 may further include rotating a high pressure system of the engine with an electric machine at a relatively slow speed to reduce a bowed rotor condition. For example, the method 300 may rotate a high pressure system at a rotational speed less than about 50 revolutions per minute, such as a rotational speed less than 25 revolutions per minute, such as a rotational speed less than 10 revolutions per minute, such as at rotational speed less than 1 revolution per minute. Such a process step may allow for the heat soak to be evenly distributed around a circumference of, e.g., one or more rotors of the high pressure system, potentially reducing or eliminating a rotor bowed condition.

It will be appreciated, however, that such efforts may, depending on, e.g., certain flight operating conditions and engine operating conditions during the preceding flight, and/or certain environmental conditions, may not be sufficient to mitigate engine soak back to the extent desired. For the exemplary aspect depicted, driving the low-pressure system, the high-pressure system, or both at (310) further includes at (326) receiving data indicative of an engine temperature parameter being in excess of a predetermined threshold while driving the low-pressure system of the aircraft with the electric machine to mitigate engine soak-back at (322). Receiving data at (326) may include receiving data from one or more engine sensors with a controller.

In response, driving the low-pressure system, the high-pressure system, or both at (310) additionally includes at (328) driving the high-pressure system of the gas turbine engine with a second electric machine to increase a cooling of the gas turbine engine (in response to receiving the data at (326)). In at least certain exemplary aspects, driving the high-pressure system of the gas turbine engine with a second electric machine at (328) may include rotating the high-pressure system of the gas turbine engine with the second electric machine at a rotational speed of less than 200 revolutions per minute and greater than one revolution per minute.

Notably, however, in other exemplary aspects, instead of receiving the engine temperature parameter at (326), the method 300 may receive data indicative of an operation condition while driving the low pressure system of the aircraft with the electric machine to mitigate engine soak-back, and the method 300 may further include driving the high pressure system of the gas turbine engine with a second electric machine to increase a cooling of the gas turbine engine in response to receiving data indicative of the operation condition. The operation condition may be a time parameter, a temperature parameter, a manual signal, or a combination thereof.

Further, it will be appreciated that for the exemplary aspect depicted, driving the low-pressure system of the gas turbine engine with the electric machine to mitigate engine soak back at (322) may include driving the low-pressure system of electric machine for a time period following parking the aircraft at (318) between at least about two minutes and two hours, such as equal to at least five minutes, such as equal to at least 10 minutes, such as up to 90 minutes, such as up to one hour.

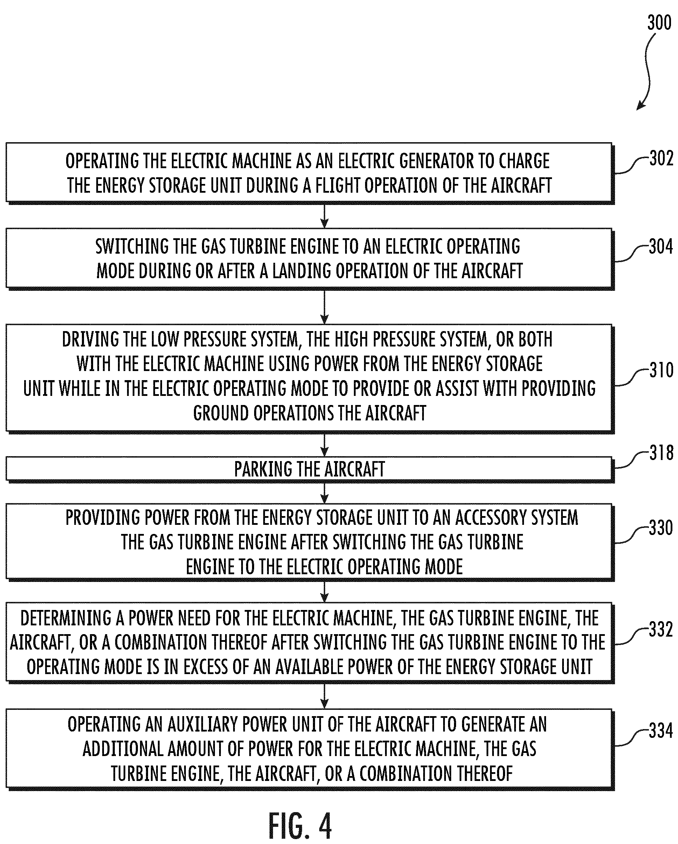

Referring now to Fig. 4, additional example aspects of the method 300 are depicted. The method 300 depicted in Fig. 4 may be configured in substantially the same manner as the method 300 depicted in Fig. 3. However, for the exemplary aspect of Fig. 4, the method 300 further includes at (330) providing power from the energy storage unit to an accessory system the gas turbine engine after switching the gas turbine engine to the electric operating mode. In at least certain exemplary aspects, providing power from the energy storage unit to an accessory system of the gas turbine engine at (330) may include providing power to an accessory engine cooling system (such as a core soak back blower), to a lubrication system (such as a lubrication system for the low-pressure system, a lubrication system for the high-pressure system, or both), etc. In these examples the accessory systems may alternatively, selectively, or additionally be configured to operate during or after shutdown of the engine as in, e.g., once the aircraft has arrived at the gate and/or parked. For example, an electric blower located within an undercowl area and operated after or during engine shutdown, may activate and operate for a predetermined amount of time based upon relevant operating or environmental parameters (e.g., taxi time, ambient air temperature) to limit a peak soakback temperature (e.g., 350 Deg. F to avoid fuel coking, or 200 Deg. C to avoid damage to an electrical machine located near the LP turbine, if provided), or the blower may operate for a period of time based on a sensed temperature located at/near, e.g., combustor nozzle, T3 location, or aft end of LP turbine. The blower may be configured to produce a forced air stream through the core (e.g., by way of a bleed port, plenum, etc. located at the downstream end of compressor) by drawing air from either a third stream of the engine, booster bypass valve or through the undercowl area (drawing air through the aft end of engine).

Additionally, although not depicted, it will be appreciated that in still certain exemplary aspects, the method 300 may further include providing power from the energy storage unit to one or more accessory systems of the aircraft, such as to one or more electronic control systems, environmental control systems, variable geometry control systems, hydraulic systems, pneumatic systems, etc.

Further, in one or more of these exemplary aspects, the energy storage unit may not be sufficient to meet all of the electrical power needs for the gas turbine engine, the electric machine, and/or aircraft. With such exemplary aspect, the method 300 further includes at (332) determining a power need for the electric machine, the gas turbine engine, the aircraft, or a combination thereof after switching the gas turbine engine to the electric operating mode is in excess of an available power of the energy storage unit, and at (334) operating an auxiliary power unit of the aircraft to generate an additional amount of power for the electric machine, the gas turbine engine, the aircraft, or a combination thereof.

In at least certain exemplary aspects, determining the power need for the electric machine, the gas turbine engine, the aircraft, or a combination thereof at (332) may include determining a power need of the electric machine after switching the gas turbine engine to the electric operating mode is in excess of the available power of the energy storage unit for the electric machine. Further, determining the power need may include, e.g., estimating the time remaining for the electric machine to drive the low-pressure system of the gas turbine engine to, e.g., mitigate engine soak pack, taxi the aircraft, etc.; receiving temperature data of the electric machine to estimate an additional amount of time to rotate the low-pressure system of the gas turbine engine, the high-pressure system of the gas turbine engine, or both to mitigate engine soak back; receiving temperature data of the electric machine indicative of a need to operate additional aircraft cooling systems (such as, e.g., the engine soak back blower, a second electric machine to rotate the high-pressure system, etc.); or the like.

Further, operating the auxiliary power unit of the aircraft to generate an additional amount of power for the electric machine, the gas turbine engine, the aircraft, or a combination thereof at (334) may include providing electrical power from the auxiliary power unit to the energy storage unit and/or the electric machine via an electric power bus of the power system.

Further, still, it will be appreciated that as noted above, the ground operations described herein are powered by the electric machine driving the low pressure system, the high pressure system, or both with power from the energy storage unit while in the electric operating mode. In at least certain exemplary aspects a substantial portion of all of the electric power utilized by the electric machine while providing or assisting with providing the ground operations ("Total Electrical Power") may come from the electric energy storage unit. For example, at least 25% of the Total Electrical Power may come from the electric energy storage unit, such as at least about 35%, such as at least about 50%, such as at least about 65%, such as at least about 75%, such as at least about 90% of the Total Electrical Power may come from the electric energy storage unit.

However, in certain exemplary aspects not all of the Total Electrical Power may come from the electric energy storage unit. For example, in certain exemplary aspects, up to 85% of the Total Electrical Power may come from the electric energy storage unit, such as up to 75% of the Total Electrical Power may come from the electric energy storage unit. The remainder of the Total Electrical Power may be provided from the APU, and/or depending on the ground operation, from a power source external to the aircraft (e.g., a ground power source).

For example, in certain exemplary aspects, when the ground operations include taxiing the aircraft, the energy storage unit may provide all the power for taxiing the aircraft, and then supplemental power may be provided to rotate the engine to mitigate rotor bow/ soakback, or vice versa. Alternatively, supplemental power may be provided for a peak output power need (such as during taxiing), but not for a lower power output need (such as rotating the engine to mitigate rotor bow/ soakback).

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims.

## Claims

1. A method (300) for operating a hybrid-electric propulsion system of an aircraft, the hybrid-electric propulsion system comprising a gas turbine engine having a high pressure system, a low pressure system, an electric machine coupled to at least the low pressure system, and an energy storage unit, the method comprising:
operating (302) the electric machine as an electric generator to charge the energy storage unit during a flight operation of the aircraft;
switching (304) the gas turbine engine to an electric operating mode during or after a landing operation of the aircraft;
driving (310) a system of the gas turbine engine with the electric machine using power from the energy storage unit while in the electric operating mode to provide or assist with providing ground operations the aircraft;
wherein driving the system of the gas turbine engine comprises driving the low pressure system, the high pressure system, or both, wherein the ground operations include driving (322)
the low pressure system of the aircraft with the electric machine to mitigate engine soak-back, and wherein the method further comprises:
parking (318) the aircraft, wherein driving the low pressure system of the aircraft with the electric machine to mitigate engine soak-back comprises driving (323) the low pressure system of the aircraft with the electric machine to mitigate engine soak-back after parking the aircraft.

2. The method of any preceding claim, wherein the ground operations include taxiing (311) the aircraft.

3. The method of claim 2, wherein driving the low pressure system, the high pressure system, or both with the electric machine comprises driving the low pressure system, the high pressure system, or both with the electric machine using power from the energy storage unit while in the electric operating mode to generate thrust sufficient for taxiing the aircraft.

4. The method of any of claims 2 to 3, wherein driving the low pressure system with the electric machine comprises providing (314) at least about 200 horsepower to the gas turbine engine with the electric machine to generate thrust for the aircraft, preferably wherein driving the low pressure system with the electric machine comprises providing at least about 250 horsepower to the gas turbine engine with the electric machine to generate thrust for the aircraft and up to about 1000 horsepower.

5. The method of any of claims 2 to 4, wherein driving the low pressure system with the electric machine comprises providing (316) at least about 200 horsepower to the gas turbine engine with the electric machine to generate thrust for the aircraft for at least about five minutes.

6. The method of any preceding claim, wherein switching the gas turbine engine to the electric operating mode during or after landing the aircraft comprises shutting off (306) a fuel flow to the gas turbine engine.

7. The method of any preceding claim, further comprising the steps of:
determining (332) a power need for the electric machine, the aircraft, or both after switching the gas turbine engine to the electric operating mode is in excess of an available power from the energy storage unit; and
providing (334) power for the electric machine, the aircraft, or both from an auxiliary power source in response to determining the power need for the electric machine, the aircraft, or both is in excess of an available power from the energy storage unit.

8. The method of any preceding claim, further comprising:
receiving (326) data indicative of an engine temperature parameter being in excess of a predetermined threshold while driving the low pressure system of the aircraft with the electric machine to mitigate engine soak-back; and
driving (328) the high pressure system of the gas turbine engine with a second electric machine to increase a cooling of the gas turbine engine.

9. The method of any preceding claim, wherein driving the low pressure system of the aircraft with the electric machine to mitigate engine soak-back comprises rotating (324) the low pressure system at a rotational speed less than 200 revolutions per minute and greater than 1 revolution per minute.

10. The method of any preceding claim, wherein driving the system of the gas turbine engine comprises driving the low pressure system, the high pressure system, or both with the electric machine using power from the energy storage unit while in the electric operating mode to generate thrust with the gas turbine engine.

11. The method of any preceding claim, further comprising providing power for the hybrid-electric propulsion system from an auxiliary power unit, from a power source external to the aircraft, or both.

12. The method of claim 1, wherein driving the system of the gas turbine engine comprises driving the low pressure system of the aircraft with the electric machine to mitigate engine soak-back by providing an airflow that rotates the high pressure system.

## Patentansprüche

1. Verfahren (300) zum Betreiben eines hybridelektrischen Vortriebssystems eines Luftfahrzeugs, wobei das hybridelektrische Vortriebssystem einen Gasturbinenmotor umfasst, der ein Hochdrucksystem, ein Niederdrucksystem, eine elektrische Maschine, die mindestens mit dem Niederdrucksystem gekoppelt ist, und eine Energiespeichereinheit aufweist, wobei das Verfahren umfasst:
Betreiben (302) der elektrischen Maschine als einen elektrischen Generator, um die Energiespeichereinheit während eines Flugbetriebs des Luftfahrzeugs aufzuladen;
Umschalten (304) des Gasturbinenmotors in einen elektrischen Betriebsmodus während oder nach einem Landevorgang des Luftfahrzeugs;
Antreiben (310) eines Systems des Gasturbinenmotors mit der elektrischen Maschine unter Verwendung von Strom aus der Energiespeichereinheit in dem elektrischen Betriebsmodus, um ein Bereitstellen von Bodenvorgängen das Luftfahrzeug bereitzustellen oder dieses zu unterstützen;
wobei das Antreiben des Systems des Gasturbinenmotors das Antreiben des Niederdrucksystems, des Hochdrucksystems oder beider umfasst, wobei die Bodenvorgänge das Antreiben (322) des Niederdrucksystems des Luftfahrzeugs mit der elektrischen Maschine umfassen, um einen Motorrücklauf zu begrenzen, und wobei das Verfahren ferner umfasst:
Parken (318) des Luftfahrzeugs, wobei das Antreiben des Niederdrucksystems des Luftfahrzeugs mit der elektrischen Maschine, um den Motorrücklauf zu begrenzen, das Antreiben (323) des Niederdrucksystems des Luftfahrzeugs mit der elektrischen Maschine umfasst, um den Motorrücklauf nach dem Parken des Luftfahrzeugs zu begrenzen.

2. Verfahren nach einem der vorstehenden Ansprüche,
wobei die Bodenvorgänge ein Rangieren (311) des Luftfahrzeugs einschließen.

3. Verfahren nach Anspruch 2, wobei das Antreiben des Niederdrucksystems, des Hochdrucksystems oder beider mit der elektrischen Maschine das Antreiben des Niederdrucksystems, des Hochdrucksystems oder beider mit der elektrischen Maschine unter Verwendung von Strom aus der Energiespeichereinheit in dem elektrischen Betriebsmodus umfasst, um ausreichend Schub zum Rangieren des Luftfahrzeugs zu erzeugen.

4. Verfahren nach einem der Ansprüche 2 bis 3, wobei das Antreiben des Niederdrucksystems mit der elektrischen Maschine das Bereitstellen (314) von mindestens etwa 200 PS an den Gasturbinenmotor mit der elektrischen Maschine umfasst, um Schub für das Luftfahrzeug zu erzeugen, vorzugsweise wobei das Antreiben des Niederdrucksystems mit der elektrischen Maschine das Bereitstellen von mindestens etwa 250 PS an den Gasturbinenmotor mit der elektrischen Maschine umfasst, um Schub für das Luftfahrzeug und bis zu etwa 1000 PS zu erzeugen.

5. Verfahren nach einem der Ansprüche 2 bis 4, wobei das Antreiben des Niederdrucksystems mit der elektrischen Maschine das Bereitstellen (316) von mindestens etwa 200 PS an den Gasturbinenmotor mit der elektrischen Maschine umfasst, um für mindestens etwa fünf Minuten Schub für das Luftfahrzeug zu erzeugen.

6. Verfahren nach einem der vorstehenden Ansprüche, wobei das Umschalten des Gasturbinenmotors in den elektrischen Betriebsmodus während oder nach dem Landen des Luftfahrzeugs ein Abschalten (306) einer Kraftstoffzufuhr zu dem Gasturbinenmotor umfasst.

7. Verfahren nach einem der vorstehenden Ansprüche, ferner umfassend die Schritte zum:
Bestimmen (332), dass ein Strombedarf für die elektrische Maschine, das Luftfahrzeug oder beide nach dem Umschalten des Gasturbinenmotors in den elektrischen Betriebsmodus höher als ein verfügbarer Strom aus der Energiespeichereinheit ist; und
Bereitstellen (334) von Strom für die elektrische Maschine, das Luftfahrzeug oder beide aus einer Hilfsstromquelle als Reaktion auf das Bestimmen, dass der Strombedarf für die elektrische Maschine, das Luftfahrzeug oder beide höher als ein verfügbarer Strom aus der Energiespeichereinheit ist.

8. Verfahren nach einem der vorstehenden Ansprüche, ferner umfassend:
Empfangen (326) von Daten, die darauf hinweisen, dass ein Motortemperaturparameter höher als ein vorbestimmter Schwellenwert ist, während des Antreibens des Niederdrucksystems des Luftfahrzeugs mit der elektrischen Maschine, um den Motorrücklauf zu begrenzen; und
Antreiben (328) des Hochdrucksystems des Gasturbinenmotors mit einer zweiten elektrischen Maschine, um eine Kühlung des Gasturbinenmotors zu erhöhen.

9. Verfahren nach einem der vorstehenden Ansprüche, wobei das Antreiben des Niederdrucksystems des Luftfahrzeugs mit der elektrischen Maschine, um den Motorrücklauf zu begrenzen, ein Drehen (324) des Niederdrucksystems mit einer Drehzahl von weniger als 200 Umdrehungen pro Minute und mehr als 1 Umdrehung pro Minute umfasst.

10. Verfahren nach einem der vorstehenden Ansprüche, wobei das Antreiben des Systems des Gasturbinenmotors das Antreiben des Niederdrucksystems, des Hochdrucksystems oder beider mit der elektrischen Maschine unter Verwendung von Strom aus der Energiespeichereinheit in dem elektrischen Betriebsmodus umfasst, um Schub mit dem Gasturbinenmotor zu erzeugen.

11. Verfahren nach einem der vorstehenden Ansprüche, ferner umfassend das Bereitstellen von Strom für das hybridelektrische Vortriebssystem aus einem Hilfstriebwerk, aus einer Stromquelle außerhalb des Luftfahrzeugs oder beiden.

12. Verfahren nach Anspruch 1, wobei das Antreiben des Systems des Gasturbinenmotors das Antreiben des Niederdrucksystems des Luftfahrzeugs mit der elektrischen Maschine umfasst, um den Motorrücklauf durch Bereitstellen eines Luftstroms, der das Hochdrucksystem dreht, zu begrenzen.

## Revendications

1. Procédé (300) permettant de faire fonctionner un système de propulsion hybride-électrique d'un aéronef, le système de propulsion hybride-électrique comprenant un moteur à turbine à gaz ayant un système haute pression, un système basse pression, une machine électrique couplée au moins au système basse pression, et une unité de stockage d'énergie, le procédé comprenant :
le fonctionnement (302) de la machine électrique en tant que générateur électrique pour charger l'unité de stockage d'énergie pendant une opération de vol de l'aéronef ;
le passage (304) du moteur à turbine à gaz à un mode de fonctionnement électrique pendant ou après une opération d'atterrissage de l'aéronef ;
l'entraînement (310) d'un système du moteur à turbine à gaz avec la machine électrique à l'aide de l'énergie de l'unité de stockage d'énergie tout en étant en mode de fonctionnement électrique afin de fournir ou d'aider à fournir des opérations au sol de l'aéronef ;
dans lequel l'entraînement du système du moteur à turbine à gaz comprend l'entraînement du système basse pression, du système haute pression, ou des deux, dans lequel les opérations au sol comportent l'entraînement (322) du système basse pression de l'aéronef avec la machine électrique afin d'atténuer le retour de chaleur du moteur, et dans lequel le procédé comprend en outre :
le stationnement (318) de l'aéronef, dans lequel l'entraînement du système basse pression de l'aéronef avec la machine électrique afin d'atténuer le retour de chaleur du moteur comprend l'entraînement (323) du système basse pression de l'aéronef avec la machine électrique afin d'atténuer le retour de chaleur du moteur après le stationnement de l'aéronef.

2. Procédé selon l'une quelconque revendication précédente,
dans lequel les opérations au sol comportent le roulage (311) de l'aéronef.

3. Procédé selon la revendication 2, dans lequel l'entraînement du système basse pression, du système haute pression, ou des deux, avec la machine électrique comprend l'entraînement du système basse pression, du système haute pression, ou des deux, avec la machine électrique à l'aide de l'énergie de l'unité de stockage d'énergie tout en étant en mode de fonctionnement électrique afin de générer une poussée suffisante pour le roulage de l'aéronef.

4. Procédé selon l'une quelconque des revendications 2 à 3, dans lequel l'entraînement du système basse pression avec la machine électrique comprend la fourniture (314) d'au moins environ 200 chevaux-vapeur au moteur à turbine à gaz avec la machine électrique afin de générer une poussée pour l'aéronef, de préférence dans lequel l'entraînement du système basse pression avec la machine électrique comprend la fourniture d'au moins environ 250 chevaux-vapeur au moteur à turbine à gaz avec la machine électrique afin de générer la poussée de l'aéronef et jusqu'à environ 1000 chevaux-vapeur.

5. Procédé selon l'une quelconque des revendications 2 à 4, dans lequel l'entraînement du système basse pression avec la machine électrique comprend la fourniture (316) d'au moins environ 200 chevaux-vapeur au moteur à turbine à gaz avec la machine électrique afin de générer une poussée pour l'aéronef pendant au moins cinq minutes environ.

6. Procédé selon l'une quelconque revendication précédente, dans lequel le passage du moteur à turbine à gaz au mode de fonctionnement électrique pendant ou après l'atterrissage de l'aéronef comprend l'arrêt (306) d'un flux de carburant vers le moteur à turbine à gaz.

7. Procédé selon l'une quelconque revendication précédente, comprenant en outre les étapes consistant à :
déterminer (332) qu'un besoin en énergie de la machine électrique, de l'aéronef, ou des deux, après le passage du moteur à turbine à gaz en mode de fonctionnement électrique est supérieur à une énergie disponible de l'unité de stockage d'énergie ; et
fournir (334) de l'énergie à la machine électrique, à l'aéronef, ou aux deux, à partir d'une source d'énergie auxiliaire après avoir déterminé que le besoin en énergie de la machine électrique, de l'aéronef, ou des deux, est supérieur à une énergie disponible de l'unité de stockage d'énergie.

8. Procédé selon l'une quelconque revendication précédente, comprenant en outre :
la réception (326) de données indiquant qu'un paramètre de température de moteur est supérieur à un seuil prédéterminé pendant l'entraînement du système basse pression de l'aéronef avec la machine électrique afin d'atténuer le retour de chaleur du moteur ; et
l'entraînement (328) du système haute pression du moteur à turbine à gaz avec une seconde machine électrique afin d'augmenter un refroidissement du moteur à turbine à gaz.

9. Procédé selon l'une quelconque revendication précédente, dans lequel l'entraînement du système basse pression de l'aéronef avec la machine électrique afin d'atténuer le retour de chaleur du moteur comprend la rotation (324) du système basse pression à une vitesse de rotation inférieure à 200 tours par minute et supérieure à 1 tour par minute.

10. Procédé selon l'une quelconque revendication précédente, dans lequel l'entraînement du système du moteur à turbine à gaz comprend l'entraînement du système basse pression, du système haute pression, ou des deux, avec la machine électrique à l'aide de l'énergie de l'unité de stockage d'énergie tout en étant en mode de fonctionnement électrique afin de générer une poussée avec le moteur à turbine à gaz.

11. Procédé selon l'une quelconque revendication précédente, comprenant en outre la fourniture d'énergie au système de propulsion hybride-électrique à partir d'une unité d'énergie auxiliaire, d'une source d'énergie externe à l'aéronef, ou des deux.

12. Procédé selon la revendication 1, dans lequel l'entraînement du système du moteur à turbine à gaz comprend l'entraînement du système basse pression de l'aéronef avec la machine électrique afin d'atténuer le retour de chaleur du moteur en fournissant un flux d'air qui fait tourner le système haute pression.
